# EUROPEAN PATENT SPECIFICATION

(11) **EP 2 571 818 B1**
(45) Date of publication and mention of the grant of the patent: **22.02.2017**
(21) Application number: 11722764.5
(22) Date of filing: 19.05.2011
(51) Int. Cl.: C02F 1/469, C02F 1/16, C02F 1/50, C02F 1/66, C02F 1/72, C02F 1/76, C02F 103/02

(54) **Evaporative Recirculation Cooling Water System, Method of Operating an Evaporative Recirculation Cooling Water System**
Dampfrezirkulations-Kühlwassersystem, Betriebsverfahren für ein Dampfrezirkulations-Kühlwassersystem
Système de refroidissement évaporatif à recirculation d'eau et son procédé de fonctionnement

(30) Priority: 19.05.2010 EP 10163269
(43) Date of publication of application: 27.03.2013
(73) Proprietor: Voltea B.V., 2171 AE Sassenheim (NL)
(72) Inventor: VAN DER WAL, Albert, 2341 LP Oegstgeest (NL); REINHOUDT, Hank Robert, 2613 DS Delft (NL); DRIESSEN, Erik, 3511 GT Utrecht (NL)
(74) Representative: EP&C
(86) International application number: PCT/EP2011/058170
(87) International publication number: WO 2011/144704

(56) References cited:
- WO-A1-01/09907
- JP-A- 2002 310 595
- US-A1- 2010 102 009

## Description

### Field of the invention

An evaporative recirculation cooling water system, the system being provided with: a recirculation loop to recirculate water through the system; a construction with a space to cool the water in the recirculation loop by evaporation; a water source for providing water into the recirculation loop; and, an ion removal apparatus for removing ions from the water, wherein the ion removal apparatus is provided with a flow through capacitor constructed and arranged for removing hardness ions from the water while leaving silica ions in the water, and the pH of water entering the flow through capacitor is controlled to a pH value between 4 and 9.

### Background art

In recent years one has become increasingly aware of the impact of human activities on the environment and the negative consequences this may have. Ways to reduce, reuse and recycle resources are becoming more important. In particular, clean water is becoming a scarce commodity.

An evaporative recirculation cooling water system may receive water from a water make up stream. The water may be used in a recirculation loop and it may receive a heat load from, for example, a heat exchanger. The water may be cooled in an open space e.g. a cooling tower where the water comes in contact with air. The cooling may be enhanced by a partial evaporation of the water in the recirculation loop and this may cause the water to be lost in the recirculation system which requires an intake of water from the make-up stream. The evaporation and the addition of water from the make up stream may cause an accumulation of dissolved species in the water of the recirculation loop. This accumulation of dissolved species may result in scaling in the recirculation system.

US 4,532,045 discloses a chemical ion removal apparatus for removing ions from the make up water to minimize the accumulation of dissolved species. For this purpose the apparatus is provided with an ion exchange system which includes weak acid cation exchange resin. A disadvantage of the use of the weak acid cation exchange resin may be the need for regeneration or replacement of the cation exchange.

JP2002310595 discloses a cooling tower with a reverse osmosis membrane module which can separate cooling water into processed water from which ions are removed and concentrated water with ions. A disadvantage of the use of a membrane may be that it also removes silica ions which are a good corrosion inhibitor and another disadvantage may be that the membrane is sensitive to silica fouling and therefore anti-foulants may be required.

EP1704123 discloses hardness ions being removed from source water in an aqueous cooling water system and control of specified chemistry residuals in the aqueous system to inhibit deposition of magnesium silicate and other silicate and silica scales on system surfaces, and to inhibit corrosion of system metallurgy. Hardness ions may be removed by ion exchange resins, reverse osmosis, electrochemical removal, chemical precipitation, evaporation/distillation. A disadvantage however may be the removal of silicate which may be a good corrosion inhibiter. A further disadvantage may be that reverse osmosis may be sensitive to silicate scaling and that ion exchange resins require regular regeneration by using chemicals.

### Summary of the invention

It is an object of the invention to improve the evaporative recirculation cooling water system.

Accordingly the present invention provides an evaporative recirculation cooling water system, the system being provided with:
a recirculation loop to recirculate water through the system;
a construction with a space to cool the water in the recirculation loop by evaporation;
a water source for providing water into the recirculation loop; and,
an ion removal apparatus for removing ions from the water, wherein the ion removal apparatus is provided with a flow through capacitor constructed and arranged for removing hardness ions from the water while leaving silica ions in the water, and the pH of water entering the flow through capacitor is controlled to a pH value between 4 and 9.

The flow through capacitor according to the invention is selective for hardness ions while leaving silica ions in the water. Silica ions may be present in the form of dissolved, polymerized and/or monomeric silica. Water may be leaving the recirculation loop by evaporation which causes a build-up of silica ions in the recirculation loop. The later is advantageously because silica may be a good corrosion inhibitor. The addition of corrosion inhibitors to the water may therefore be omitted or less corrosion inhibitors may be necessary.

The flow through capacitor may be provided with a waste water outlet to discharge waste water with an increased concentration of hardness ions. The waste water will have the same concentration of silica ions as the water that enters the flow through capacitor since the flow through capacitor does not remove silica ions and hence does not alter the silica concentration.

The flow through capacitor may be provided between the water source and the recirculation loop so as to remove hardness ions from the water of the source before providing the water to the recirculation loop. Since the water from the source has a low concentration of silicate ions the waste water will have the same low concentration of silicate ions leaving more silicate ions in the recirculation loop.

The flow through capacitor may be provided in a bypass of the recirculation loop so as to remove hardness ions from water in the recirculation loop. An advantage of the flow through capacitor in the bypass is that concentration of hardness ions in the recirculation loop can be directly controlled. The concentration of silicate ions in the waste water output of the flow through capacitor may however be higher resulting in lower accumulation of silica ions in the recirculation loop and some loss of silica.

The system may be provided with a sensor for measuring a chemical and/ or physical property of the water in the recirculation system. The sensor may be measuring one or more of the alkalinity, the hardness, and/or the conductance of the water in the recirculation system. The ion removal apparatus may be provided with a flow adjuster e.g. a pump for adjusting the velocity of the water flowing through the flow through capacitor. The system may be provided with an addition device for providing chemical additives to the water. The addition device is constructed and arranged to add corrosion inhibitors, scale inhibitors and/or biocides to the water. The system may be provided with a controller connected to the first and second electrode of the flow through capacitor to control charging and/or dis-charging of the flow through capacitor; and connected to the regulator to direct water to the recirculation loop during charging of the flow through capacitor and to the waste water output during dis-charging of the flow through capacitor. The controller may be connected to the sensor and the flow adjuster so as to adjust the water velocity in the flow through capacitor in response to a function of the chemical and/ or physical property of the water in the recirculation system.

The invention further relates to a method of operating an evaporative recirculation cooling water system, the method comprising:
allowing water to enter a recirculation loop of the system;
recirculating the water in a recirculation loop;
cooling water in the recirculation loop by evaporation; and,
removing hardness ions from the water while leaving the silicate ions in the water by allowing the water to flow through a flow through capacitor while charging the electrodes of the flow through capacitor and directing the water from the flow through capacitor to the recirculation loop after the hardness ions have been fully or partially removed from the electrodes, further comprising controlling the pH of water entering the flow through capacitor to a pH value between 4 and 9 and most preferably between 5 and 8.

The method may comprise removing hardness ions from the water before entering the recirculation loop while leaving the silica ions, such as dissolved silica, monomeric silica and polymerised silica, in the water and, concentrating silica ions in the recirculation loop by evaporation. Consequently, silica such as polymerized and monomeric silica concentrations are increased in the cooling system and start acting as corrosion inhibitors, since their concentrations reach concentrations where silica acts as corrosion inhibitor.

The concentration of silicate ions may become 3 to 5 times higher in the recirculation loop than in the entering the system. The silica ions may function as a good corrosion inhibitor at this concentration.

The method may further comprise directing the water from the flow through capacitor to a waste water output during dis-charging of the capacitor. The method may comprise providing chemical additives to the water in the recirculation loop, the chemical additives being one or more of a corrosion inhibitor, a scale inhibitor, and a biocide. The chemical additives may be non-ionic and/or non charged chemical additives. The chemical additives may comprise one or more of the following rust inhibitors: polyphosphates, lignosulphonates, triazoles, tannines, silicates, and sarcosinates. The chemical additives may comprise one or more of the following biocides: isothiazolines, bronopol, glutaraldehyde, diethyl-m-toluamide, hydrogenperoxide, and chlorinedioxide.

These and other aspects, features and advantages will become apparent to those of ordinary skill in the art from reading the following detailed description and the appended claims. For the avoidance of doubt, any feature of one aspect of the present invention may be utilised in any other aspect of the invention. It is noted that the examples given in the description below are intended to clarify the invention and are not intended to limit the invention to those examples per se. Similarly, all percentages are weight/weight percentages unless otherwise indicated. Numerical ranges expressed in the format "from x to y" are understood to include x and y. When for a specific feature multiple preferred ranges are described in the format "from x to y", it is understood that all ranges combining the different endpoints are also contemplated.

### Brief description of the figures

Embodiments of the invention will be described, by way of example only, with reference to the accompanying schematic drawings in which corresponding reference symbols indicate corresponding parts, and in which:
Figure 1 shows an evaporative recirculation cooling water system according to a first embodiment; and,
Figure 2 shows an evaporative recirculation cooling water system according to a second embodiment.

### Detailed description of the invention

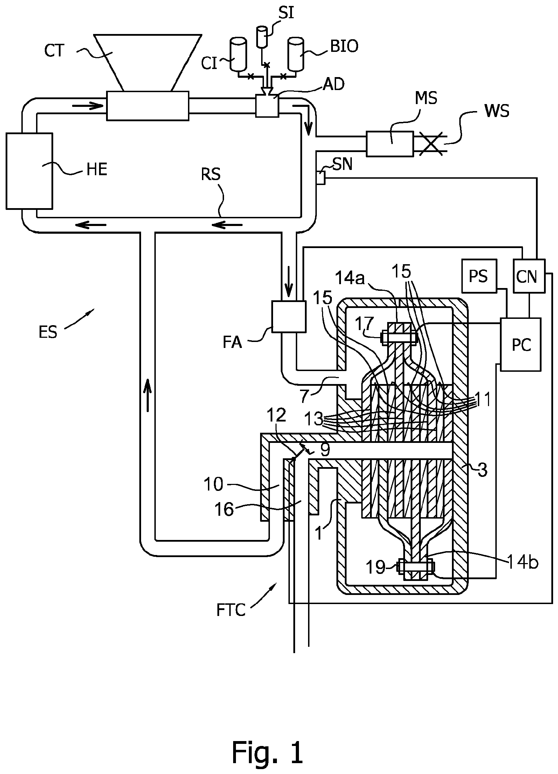

Figure 1 shows an evaporative recirculation cooling water system ES according to a first embodiment. The system comprises a water make up stream MS to provide water to the recirculation loop RS from a water source WS, for example tap water. The recirculation loop RS may comprise a heat exchanger HE which warms the water and a cooling tower CT provided with a space to cool the water. An ion removal apparatus for removing ions is provided with a flow through capacitor FTC connected with the recirculation loop RS via an inlet 7 an outlet 9 provided with a regulator e.g. valve 12 to direct the flow of water from the outlet 9 back to the recirculation circuit RS via purified water outlet 10 or to direct the flow of water to a waste water output 16.

The flow through capacitor has a housing comprising a first housing part 1 and a second housing part 3 made of a relatively hard material e.g. a hard plastic. By pressing the first and second housing parts on each other, for example with a bolt and nut (not shown) the housing is made water tight.

The housing may be provided with a water inlet 7 and a water outlet 9. During ion removal of the water, the water will flow from the inlet 7 to the outlet 9 through the spacers 11 which separates a first electrode 13 and a second electrode 15 of the flow through capacitor from each other. The current collectors 14a and 14b may be clamped within the housing and connected to the power converter PC. By creating an electrical potential difference between the first and second electrode by a power converter PC, for example by applying a positive voltage to the first electrode (the anode) 13 and a negative voltage to the second electrode (cathode) 15 the anions of the water flowing through the spacer 11 may be attracted to the first electrode and the cations may be attracted to the second electrode. In this way the ions (anions and cations) may be removed from the water flowing through the spacer 11. The purified water may be discharged to the purified water outlet 10 by the valve 12.

Once the electrodes are saturated with ions the electrodes may be regenerated, whereby the ions will be released in the water in the spacer 11 in between the electrodes. The water in the spacer compartment with the increased ion content may be flushed away by closing the purified water outlet 10 with valve 12 under control of the controller CN and opening the waste water outlet 16. Once most ions are released from the electrodes and the water with increased ion content may be flushed away via the waste water outlet 16 the electrodes are regenerated and may be used again for attracting ions.

A power converter PC under control of the controller CN may be used to convert the power from the power source PS to the right electrical potential. The electrical potential differences between the anode and the cathode are rather low, for example lower than 12 Volt, preferably lower than 6 Volt, even more preferably lower than 2 and most preferably less than 1.5 Volts. It is important that the electrical resistance of the electrical circuit is low. For this purpose, current collectors 14a which are in direct contact with the first electrodes are connected to each other with the first connector 17 and the current collectors 14b which are in direct contact with the second electrodes are connected to each other with the second connector 19. The current collectors 14a and 14b may be made substantially metal free to keep them corrosion free in the wet interior of the housing and at the same time cheap enough for mass production. The electrodes 13, 15 may be produced from a substantially metal free electrically conductive high surface area material, such as activated carbon, carbon black, carbon aerogels, carbon nano fibres, carbon nano tubes, graphene or mixtures thereof, which are placed on both sides of the current collector. The high surface area layer is a layer with a high surface area in square meter per weight of material, for example more than 500 square meter per gram of material. This set-up may ensure that the capacitor works as an electrical double layer capacitor with sufficient ion storage capacity. The overall surface area of even a thin layer of such a material is many times larger than a traditional material like aluminum or stainless steel, allowing many more charged species such as ions to be stored in the electrode material. The ion removal capacity of the apparatus for removal of ions is thereby increased.

A sensor SN for measuring a chemical and/ or physical property of the water in the recirculation system RS is included in the system. The sensor SN is measuring one or more of the alkalinity, the hardness, the conductance and/or the amount of the water in the recirculation system RS.

The ion removal apparatus may be provided with a flow adjuster FA, for example, a pump for adjusting the velocity of the water flowing through the flow through capacitor FTC.

The evaporative recirculation cooling water system may be provided with an addition device AD for providing chemical additives to the water. The addition device AD may be connected to tanks CI, BIO and SI to provide corrosion inhibitors, biocides and optionally scale inhibitors respectively to the water. As depicted the addition device AD is adding chemicals to the water in the recirculation loop RS, however the chemicals may also be provided in the water make up stream MS.

The controller CN may be controlling a power converter PC which may be operable connected to the first electrodes 13 via the first connector 17 and the current collectors 14a and with the second electrodes 15 via current collectors 14b and second connector 19.

The controller CN controls charging and/or dis-charging of the flow through capacitor FTC and controls the valve 12 to direct water to the recirculation loop RS during charging of the flow through capacitor and to the waste water output 16 during dis-charging of the flow through capacitor. The controller CN may be connected to the sensor SN and the flow adjuster FA as to adjust the water velocity in the flow through capacitor FTC in response to a function of the chemical and/ or physical property of the water in the recirculation system RS. For example if the ion content of the water as measured with sensor SN is lower than a threshold value the flow adjuster FA may completely block the flow of water through the FTC and the FTC may not be operated. If the ion content in the recirculation loop RS will become higher than the threshold value as measured by the sensor SN the controller SN may switch the flow adjuster FA so as to pump water from the recirculation system through the FTC and the controller may control the power converter PC to charge the electrodes so as to remove ions from the water. The purified water will flow back to the recirculation system RS via the outlet 9 and the purified water outlet 10.

Once the electrodes of the flow through capacitor become saturated with ions the capacitor may be regenerated by going into the regeneration mode by reducing the applied potential or even reversing the polarity of the electrodes or by shunting the electrical circuit. The energy that is released during the regeneration mode can be recovered and returned to the power source PS. This may help to reduce the overall energy consumption of the apparatus for removal of ions. During regeneration the ions released from the electrodes will be released in the water in the flow through capacitor and flushed away to the waste water output 16 by the valve 12. An advantage of the use of the evaporative recirculation cooling water system according to the invention is that less water is needed via the make up water system MS because the concentration of dissolved species in the water of the recirculation loop can be kept lower with the flow through capacitor. Without the invention water in the recirculation loop may be partially flushed to the waste water output to avoid high concentrations of dissolved species in the recirculation loop. With the flow through capacitor the dissolved species will be concentrated in the flow through capacitor and in a relatively high concentration flushed to the waste water output 16. The flow through capacitor according to the invention may selectively remove hardness ions while leaving silicate ions in the water. Water may be leaving the recirculation loop by evaporation which causes a build-up of silicate ions in the recirculation loop. The later is advantageously because silicates are a good corrosion inhibitor. The addition of corrosion inhibitors to the water may therefore be omitted or less corrosion inhibitors may be required.

In an evaporative recirculation cooling water system certain chemicals are added in order to avoid or minimize common problems such as corrosion (rust), deposit formation (in the -warm- heat exchangers and cooling tower packings), and slime formation (due to excessive microbial growth). These chemicals are called corrosion inhibitors, scale inhibitors and microbiocides respectively. By using the flow through capacitor less water will be drained from the recirculation cooling water system via the waste water output 16 and therefore less make-up water will be required resulting in a reduced chemical need for the recirculation cooling water system.

Corrosion inhibitors are substances which, when added in small amounts into corrosive environments such as recirculating cooling water, reduce the rate of corrosion of the metal piping and heat exchangers present in the cooling system. Corrosion inhibitors may be classified as anodic, cathodic, or both, depending on which portion of the electrochemical corrosion cell they disrupt. Combining cathodic with anodic corrosion inhibitors, provides synergies in corrosion inhibition.

Corrosion inhibitors that may be used in the evaporative recirculation cooling water system according to the invention are phosphates (either orthophopsphate, polyphosphate or combinations thereof), Nitrite, Zinc, Lignosulphonates, Molybdate, Triazoles (Mercaptotriazole, benzotriazole, tollyltriazole), Phosphonates (such as AminoMethylenePhosphonate, HydroxyEthyleneDiPhosphonate, PhosphonoButaneTriCarboxylic Acid, Phosphonosuccinic acid), Tannines, Silicates (both ionic silica and colloidal or polymerized silica) and sarcosinates.

Because the FTC technology removes ionic species, and may not substantially remove non-ionic or non charged corrosion inhibitors, the following corrosion inhibitors may be advantageously for use in recirculating cooling systems which have an FTC device on a bypass (constantly removing ionic salts from the recirculation water) according to the invention: Polyphosphates, Lignosulphonates, Triazoles, Tannines, Silicates and Sarcosinates. Since the FTC will not remove these corrosion inhibitors it is advantageously to use them in the evaporative recirculation cooling water system according to the invention. Silicates form very weak ions in water which are not removed by the FTC at neutral pH. Since the FTC will not remove these corrosion inhibitors it is advantageously to use them in the evaporative recirculation cooling water system according to the invention. At higher pH values the silica may start to be removed by the FTC. Hence, by varying the pH of the feedwater the levels of silica, e.g. silicate, may be controlled in the cooling water system. Under normal operating conditions of the cooling water system it may be preferred to increase the silica levels, such as dissolved silica and silicate, in the cooling water system. It is therefore necessary to operate the FTC such that the purified water may have a pH lower than 9 and most preferably lower than 8. On the other hand the pH of the purified water may not be too acidic in order to prevent acidic corrosion, the pH of the purifed water may therefore be higher than 4 and most preferably higher than 5. A somewhat acidic pH of the purified water may be preferred, because then calcium carbonate scaling in the FTC and cooling water system do not occur, whereas at the same time silica deposits, such as silicate, are formed in the cooling water system, which may help to prevent corrosion. The pH of the water entering the FTC may therefore be measured (optionally with a pH sensor provided to the cooling tower system) and even adjusted by adding a base so that the pH of the water entering the FTC is lower than 9 and preferably lower than 8. The pH of the water entering the FTC may be measured (optionally with a pH sensor provided to the cooling tower system) and even adjusted by adding an acid so that the pH of the water entering the FTC is larger than 4 and preferably larger than 5.

Microbiocides are substances which, when added in small amounts to recirculating cooling water, reduce the rate of microbial growth in the cooling system, and avoid formation of biofouling (which is causing secondary problems such as Microbially Induced Corrosion or MIC and which is negatively effecting heat exchange efficiency both in cooling towers and heat exchangers). Microbiocides may be classified either as oxidizing or as non-oxidizing biocides. Typically, small amounts of more expensive non-oxidizing biocides may be combined with larger amounts of less expensive oxidizing biocides. G proteins Microbiocides inhibit microorganisms in a variety of ways. Some of these mechanisms are: altering permeability of the cell wall and/or cell membrane thereby interfering with vital processes of the microbe, destroying or denaturating essential proteins such as proteins involved in energy production of microbes, inhibition of enzyme-substrate reactions, oxidation of protein groups, etc.

Biocides that may be used in the evaporative recirculation cooling water system according to the invention are microbiocides such as: isothiazolines, bronopol, glutaraldehyde, diethyl-m-toluamide, hydrogenperoxide, chlorinedioxide, bromochlorodimethylhydantoine, bromide activated by bleach (either sodiumbromide or ammoniumbromide), quaternary ammonium salts, THPS (Tetrakis(hydroxymethyl)phosphonium sulfate), sodiumhypochlorite, peracetic acid, DNPA (Dibromonitrilopropionamide).

Because the FTC technology may remove ionic species, and may not substantially remove non-ionic or non charged microbiocides, the following microbiocides may be recommended for use in recirculating cooling systems which have an FTC device on a bypass (constantly removing ionic salts from the recirculation water) according to an embodiment: isothiazolines, bronopol, glutaraldehyde, diethyl-m-toluamide, hydrogenperoxide, chlorinedioxide. Since the FTC may not substantially remove these biocides it is advantageously to use them in the evaporative recirculation cooling water system according to the embodiment.

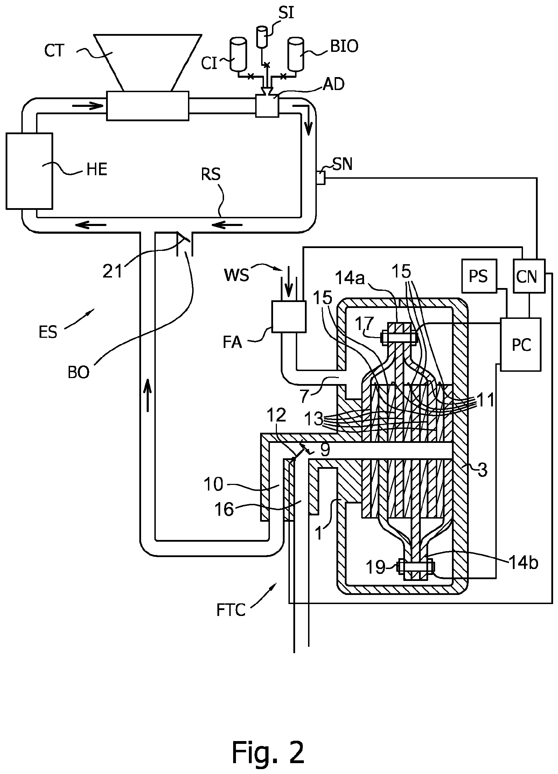

Figure 2 shows an evaporative recirculation cooling water system ES according to a second embodiment. The system comprises a water source WS to provide water to the recirculation loop RS from, for example, tap water via a flow through capacitor FTC. The recirculation loop RS may comprise a heat exchanger HE which warms the water and a construction e.g. cooling tower CT provided with a space to cool the water. An ion removal apparatus for removing ions e.g. a flow through capacitor FTC may be connected with the recirculation loop RS via an water outlet 9 provided with a regulator e.g. valve 12 to direct the flow of water from the water outlet 9 to the recirculation circuit RS via purified water outlet 10 or to direct the flow of water to a waste water output 16.

The flow through capacitor may have a housing comprising a first housing part 1 and a second housing part 3 made of a relatively hard material e.g. a hard plastic. By pressing the first and second housing parts on each other, for example with a bolt and nut (not shown) the housing is made water tight.

The housing may be provided with a water inlet 7 and a water outlet 9. During ion removal of the water, the water will flow from the inlet 7 to the outlet 9 through the spacers 11 which separates a first electrode 13 and a second electrode 15 of the flow through capacitor from each other. The current collectors 14a and 14b are clamped within the housing and connected to the power converter PC. By creating an electrical potential difference between the first and second electrode by a power converter PC, for example by applying a positive voltage to the first electrode (the anode) 13 and a negative voltage to the second electrode (cathode) 15 the anions of the water flowing through the spacer 11 are attracted to the first electrode and the cations are attracted to the second electrode. In this way ions (anions and cations) may be removed from the water flowing through the spacer 11. The purified water with reduced levels of hardness ions may be discharged to the purified water outlet 10 by the valve 12.

Once the electrodes are saturated with ions the electrodes may be regenerated, whereby the ions will be released in the water in the spacer 11 in between the electrodes. The water in the spacer compartment with the increased ion content will be flushed away by closing the purified water outlet 10 with valve 12 under control of the controller CN and opening the waste water outlet 16. Once most ions are released from the electrodes and the water with increased ion content is flushed away via the waste water outlet 16 the electrodes are regenerated and can be used again for attracting ions.

A power converter PC under control of the controller CN is used to convert the power from the power source PS to the right electrical potential. The electrical potential differences between the anode and the cathode are rather low, for example lower than 12 Volt, preferably lower than 6 Volt, even more preferably lower than 2 and most preferably less than 1.5 Volts. It is important that the electrical resistance of the electrical circuit is low. For this purpose, current collectors 14a which are in direct contact with the first electrodes are connected to each other with the first connector 17 and the current collectors 14b which are in direct contact with the second electrodes are connected to each other with the second connector 19. The current collectors 14a and 14b may be made substantially metal free to keep them corrosion free in the wet interior of the housing and at the same time cheap enough for mass production. The electrodes 13, 15 may be produced from a substantially metal free electrically conductive high surface area material, such as activated carbon, carbon black, carbon aerogels, carbon nano fibres, carbon nano tubes, graphene or mixtures thereof, which are placed on both sides of the current collector. The high surface area layer is a layer with a high surface area in square meter per weight of material, for example more than 500 square meter per gram of material. This set-up may ensure that the capacitor works as an electrical double layer capacitor with sufficient ion storage capacity. The overall surface area of even a thin layer of such a material is many times larger than a traditional material like aluminum or stainless steel, allowing many more charged species such as ions to be stored in the electrode material. The ion removal capacity of the apparatus for removal of ions is thereby increased.

A sensor SN for measuring a chemical and/ or physical property of the water in the recirculation system RS is included in the system. The sensor SN is measuring one or more of the alkalinity, the hardness, and/or the conductance of the water in the recirculation system RS. The sensor SN may also measure the amount of water in the recirculation loop.

The ion removal apparatus may be provided with a flow adjuster FA, for example, a pump for adjusting the velocity of the water flowing through the flow through capacitor FTC.

The evaporative recirculation cooling water system may be provided with an addition device AD for providing chemical additives to the water. The addition device AD may be connected to tanks CI, BIO and SI to provide corrosion inhibitors, biocides and optionally scale inhibitors respectively to the water. As depicted the addition device AD is adding chemicals to the water in the recirculation loop RS, however the chemicals may also be provided in the water make up stream MS after the FTC. By locating the flow through capacitor FTC between the water source WS and the addition device AD, the addition device AD may add the corrosion inhibitors CI, the biocides BIO and the scale inhibitors after the water has passed the FTC. The chemical additives will therefore not influence or harm the working of the FTC.

The controller CN may be controlling a power converter PC which is operable connected to the first electrodes 13 via the first connector 17 and the current collectors 14a and with the second electrodes 15 via current collectors 14b and second connector 19.

The controller CN controls charging and/or dis-charging of the flow through capacitor FTC and controls the valve 12 to direct water to the recirculation loop RS during charging of the flow through capacitor and to the waste water output 16 during dis-charging of the flow through capacitor. The controller CN may be connected to the sensor SN and the flow adjuster FA as to adjust the water velocity in the flow through capacitor FTC in response to a function of the chemical and/ or physical property of the water in the recirculation system RS or the amount of water in the recirculation loop. For example if the amount of water as measured with sensor SN is lower than a threshold value the flow adjuster FA may increase the flow of water through the FTC and the FTC may be operated to remove the hardness ions from the water. The purified water will flow to the recirculation system RS via the outlet 9 and the purified water outlet 10.

Once the electrodes of the flow through capacitor become saturated with ions the capacitor may be regenerated by going in the regeneration mode by reducing the applied voltage or even reversing the polarity of the electrodes or by shunting the electrical circuit. The energy that is released during the regeneration mode can be recovered and returned to the power source PS. This may help to reduce the overall energy consumption of the apparatus for removal of ions. During regeneration the ions released from the electrodes will be release in the water in the flow through capacitor and flushed away to the waste water output 16 by the valve 12. An advantage of the use of the evaporative recirculation cooling water system according to the invention is that less water is needed via the make up water system MS because the concentration of dissolved species in the water of the recirculation loop may be lower with the flow through capacitor.

In evaporative recirculation cooling water system certain chemicals may be added in order to avoid or minimize common problems such as corrosion (rust), deposit formation (in the -warm- heat exchangers and cooling tower packings), and slime formation (due to excessive microbial growth). These chemicals are called corrosion inhibitors, scale inhibitors and microbiocides respectively. By using the flow through capacitor less water will be used from the make up water system MS and flushed to the waste water output 16 so that less chemicals may need to be added. The flow through capacitor according to the invention may selectively remove the hardness ions while leaving silica ions in the water. Water may be leaving the recirculation loop by evaporation which causes a build-up of silica ions in the recirculation loop. The concentration of silica ions may be 3 to 5 times higher in the recirculation loop caused by this build-up than in the water from the water source. The later is advantageously because silicaions are a good corrosion inhibitor. The addition of corrosion inhibitors to the water may therefore be omitted or less corrosion inhibitors may be necessary.

Corrosion inhibitors are substances which, when added in small amounts to corrosive environments such as recirculating cooling water, reduce the rate of corrosion of the metal piping and heat exchangers present in the cooling system. Corrosion inhibitors may be classified as anodic, cathodic, or both, depending on which portion of the electrochemical corrosion cell they disrupt. Combining cathodic with anodic corrosion inhibitors, provides synergies in corrosion inhibition.

Corrosion inhibitors that may be used in the evaporative recirculation cooling water system according to the invention are phosphates (either orthophopsphate, polyphosphate or combinations thereof), Nitrite, Zinc, Lignosulphonates, Molybdate, Triazoles (Mercaptotriazole, benzotriazole, tollyltriazole), Phosphonates (such as AminoMethylenePhosphonate, HydroxyEthyleneDiPhosphonate, PhosphonoButaneTriCarboxylic Acid, Phosphonosuccinic acid), Tannines, Silicates (both ionic silica and colloidal or polymerized silica) and sarcosinates.

Microbiocides are substances which, when added in small amounts to recirculating cooling water, may reduce the rate of microbial growth in the cooling system, and avoid formation of biofouling (which is causing secondary problems such as Microbially Induced Corrosion or MIC and which is negatively effecting heat exchange efficiency both in cooling towers and heat exchangers). Microbiocides may be classified either as oxidizing or as non-oxidising biocides. Typically, small amounts of more expensive non-oxidising biocides may be combined with larger amounts of less expensive oxidizing biocides. G proteins Microbiocides inhibit microorganisms in a variety of ways. Some of these mechanisms are: altering permeability of the cell wall and/or cell membrane thereby interfering with vital processes of the microbe, destroying or denaturating essential proteins such as proteins involved in energy production of microbes, inhibition of enzyme-substrate reactions, oxidation of protein groups, etc.

Biocides that may be used in the evaporative recirculation cooling water system according to the invention are Microbiocides such as: isothiazolines, bronopol, glutaraldehyde, diethyl-m-toluamide, hydrogenperoxide, chlorinedioxide, bromochlorodimethylhydantoine, bromide activated by bleach (either sodiumbromide or ammonoimbromide), quaternary ammonium salts, THPS (Tetrakis(hydroxymethyl)phosphonium sulfate), sodiumhypochlorite, peracetic acid, DNPA (Dibromonitrilopropionamide).

If the concentration of hardness ions in the water in the recirculation loop increases because of evaporation then the water may be drained via the blow down port BO. The sensor SN may be used to measure the concentration of hardness ions in the water of the recirculation loop and via controller CN the valve 21 to control the draining of the water may be opened if the concentration of hardness ions in the water is too high. The controller CN may control the flow adjuster FA to refresh the water in the recirculation loop with water with a low concentration of hardness ions because the majority of the hardness ions is removed by the FTC.

While specific embodiments of the invention have been described above, it will be appreciated that the invention may be practiced otherwise than as described. The description is intended to be illustrative, not limiting. Thus, it will be apparent to one skilled in the art that modifications may be made to the invention as described without departing from the scope of the claims set out below.

## Claims

1. An evaporative recirculation cooling water system, the system being provided with:
a recirculation loop to recirculate water through the system;
a construction with a space to cool the water in the recirculation loop by evaporation;
a water source for providing water into the recirculation loop; and,
an ion removal apparatus for removing ions from the water, wherein the ion removal apparatus is provided with a flow through capacitor constructed and arranged for removing hardness ions from the water while leaving silica ions in the water, and the pH of water entering the flow through capacitor is controlled to a pH value between 4 and 9.

2. The system according to claim 1, wherein the flow through capacitor is provided with a waste water output to discharge waste water with an increased concentration of hardness ions.

3. The system according to claims 1 or 2, wherein the flow through capacitor is provided between the water source and the recirculation loop so as to remove hardness ions from the water of the source before providing the water to the recirculation loop.

4. The system according to claims 1 or 2, wherein the flow through capacitor is provided in a bypass of the recirculation loop so as to remove harness ions from water in the recirculation loop.

5. The system according to any of the preceding claims, wherein the system is provided with a sensor to measure a chemical and/or physical property of the water in the recirculation loop for example one or more of the pH, alkalinity, the hardness, the concentrations of silica ions, the conductance of the water and/or the amount of water in the recirculation loop.

6. The system according to any of the preceding claims, wherein the ion removal apparatus is provided with a flow adjuster for adjusting a velocity of the water flowing through the flow through capacitor.

7. The system according to any of the preceding claims, wherein the system is provided with an addition device for providing chemical additives to the water and the addition device is constructed and arranged to add corrosion inhibitors, scale inhibitors and/or biocides to the water.

8. The system according to any of claims 2-7, wherein the system is provided with a controller, controlling charging and/or dis-charging of a first and second electrode of the flow through capacitor; and controlling a regulator to direct water to the recirculation loop during charging of the flow through capacitor and to the waste water output during dis-charging of the flow through capacitor, wherein the controller is controlling the flow adjuster so as to adjust the water velocity in the flow through capacitor in response to a function of the chemical and/ or physical property of the water in the recirculation system as measured with the sensor.

9. The system according to claim 1, wherein the concentration of silica ions in the recirculation loop is controlled by controlling the pH of water entering the flow through capacitor to a pH value preferably between 5 and 8.

10. A method of operating an evaporative recirculation cooling water system, the method comprising:
allowing water to enter a recirculation loop of the system;
recirculating the water in a recirculation loop;
cooling water in the recirculation loop by evaporation; and,
removing hardness ions from the water while leaving the silica ions in the water by allowing the water to flow through a flow through capacitor while charging the flow through capacitor and directing the water from the flow through capacitor to the recirculation loop after the hardness ions have been removed, further comprising controlling the pH of water entering the flow through capacitor to a pH value between 4 and 9 and most preferably between 5 and 8.

11. The method according to claim 10, wherein the method comprises
removing hardness ions from the water before entering the recirculation loop while leaving the silica ions in the water and, concentrating those silica ions in the recirculation loop by evaporation.

12. The method according to any of claims 10 and 11, wherein the concentration of silica ions is between 3 to 5 times higher in the recirculation loop than in the water entering the recirculation loop.

13. The method according to any of claims 10 to 12, wherein the concentration of silica ions in the recirculation loop is controlled by controlling the pH of water entering the flow through capacitor.

14. The method according to any of claims 10 -12, wherein the method comprises adding chemical additives to the water wherein the chemical additives are non-ionic and/or non charged chemical additives.

15. The method according to claim 14, wherein the chemical additives comprise one or more of the following rust inhibitors: polyphosphates, lignosulphonates, triazoles, tannines, silicates, and sarcosinates .

16. The method according to claim 10, wherein the method comprises directing water from the recirculation loop to the flow through capacitor to remove hardness ions from water of the recirculation loop while leaving the dissolved silica ions in the water and returning the water to the recirculation loop.

## Patentansprüche

1. Verdampfungsrezirkulations-Kühlwassersystem, wobei das System versehen ist mit:
einer Rezirkulationsschleife, um Wasser durch das System zu rezirkulieren;
eine Konstruktion mit einem Raum, um das Wasser in der Rezirkulationsschleife durch Verdampfung zu kühlen;
eine Wasserquelle, um in der Rezirkulationsschleife Wasser vorzusehen; und
eine Ionenentfernungsvorrichtung zur Entfernung von Ionen aus dem Wasser, wobei die Ionenentfernungsvorrichtung mit einem Durchflusskondensator versehen ist, der so konstruiert und angeordnet ist, um Härteionen aus dem Wasser zu entfernen, während Silicaionen in dem Wasser zurückgelassen werden, und wobei der pH des Wassers, welches in den Durchflusskondensator eintritt, auf einen pH-Wert zwischen 4 und 9 reguliert wird.

2. System nach Anspruch 1, wobei der Durchflusskondensator mit einem Abwasserausgang versehen ist, um Abwasser mit einer erhöhten Konzentration an Härteionen abzuziehen.

3. System nach Anspruch 1 oder 2, wobei der Durchflusskondensator zwischen der Wasserquelle und der Rezirkulationsschleife vorgesehen ist, um so Härteionen aus dem Wasser der Quelle zu entfernen, bevor das Wasser der Rezirkulationsschleife zugeführt wird.

4. System nach Anspruch 1 oder 2, wobei der Durchflusskondensator in einem Bypass der Rezirkulationsschleife vorgesehen ist, um so Härteionen aus dem Wasser in der Rezirkulationsschleife zu entfernen.

5. System nach mindestens einem der vorangehenden Ansprüche, wobei das System mit einem Sensor versehen ist, um eine chemische und/oder physikalische Eigenschaft des Wassers in der Rezirkulationsschleife zu messen, beispielsweise eines oder mehrere aus dem pH, Alkalinität, der Härte, den Konzentrationen an Silicaionen, der Leitfähigkeit des Wassers und/oder der Menge an Wasser in der Rezirkulationsschleife.

6. System nach mindestens einem der vorangehenden Ansprüche, wobei die lonenentfernungsvorrichtung mit einem Strömungsregler versehen ist, zur Einstellung einer Geschwindigkeit des Wassers, das durch den Durchflusskondensator fließt.

7. System nach mindestens einem der vorangehenden Ansprüche, wobei das System mit einer Zugabevorrichtung versehen ist, um das Wasser mit chemischen Additiven zu versehen, und die Zugabevorrichtung so konstruiert und angeordnet ist, um Korrosionsinhibitoren, Ablagerungsinhibitoren und/oder Biozide dem Wasser zuzusetzen.

8. System nach mindestens einem der Ansprüche 2-7, wobei das System mit einer Steuereinrichtung versehen ist, welche das Laden und/oder Entladen einer ersten und einer zweiten Elektrode des Durchflusskondensators reguliert; und welche einen Regler reguliert, um Wasser der Rezirkulationsschleife während dem Laden des Durchflusskondensators und zu dem Abwasserausgang während dem Entladen des Durchflusskondensators zuzuführen, wobei die Steuereinrichtung den Strömungsregler reguliert, um so die Wassergeschwindigkeit in dem Durchflusskondensator als Antwort auf eine Funktion der chemischen und/oder physikalischen Eigenschaft des Wassers in dem Rezirkulationssystem, die mit dem Sensor gemessen wird, einzustellen.

9. System nach Anspruch 1, wobei die Konzentration an Silicaionen in der Rezirkulationsschleife reguliert wird durch Regulieren des pH des Wassers, das in den Durchflusskondensator eintritt, auf einen pH-Wert von vorzugsweise zwischen 5 und 8.

10. Verfahren zum Betreiben eines Verdampfungsrezirkulations-Kühlwassersystems, wobei das Verfahren umfasst:
Eintretenlassen von Wasser in eine Rezirkulationsschleife des Systems;
Rezirkulieren des Wassers in einer Rezirkulationsschleife;
Kühlen von Wasser in der Rezirkulationsschleife durch Verdampfung; und
Entfernen von Härteionen aus dem Wasser, während Silicaionen in dem Wasser zurückgelassen werden, in dem das Wasser durch einen Durchflusskondensator strömen gelassen wird, während der Durchflusskondensator geladen wird, und Leiten des Wassers von dem Durchflusskondensator zu der Rezirkulationsschleife, nachdem die Härteionen entfernt worden sind, weiterhin umfassend das Regulieren des pH des Wassers, welches in den Durchflusskondensator eintritt, auf einen pH-Wert zwischen 4 und 9, und am meisten bevorzugt zwischen 5 und 8.

11. Verfahren nach Anspruch 10, wobei das Verfahren umfasst
Entfernen von Härteionen aus dem Wasser vor dem Eintritt in die Rezirkulationsschleife, während die Silicaionen in dem Wasser zurückgelassen werden, und Konzentrieren dieser Silicaionen in der Rezirkulationsschleife durch Verdampfung.

12. Verfahren nach einem der Ansprüche 10 und 11, wobei die Konzentration an Silicaionen in der Rezirkulationsschleife zwischen 3- bis 5-mal höher ist als in dem Wasser, das in die Rezirkulationsschleife eintritt.

13. Verfahren nach mindestens einem der Ansprüche 10 bis 12, wobei die Konzentration an Silicaionen in der Rezirkulationsschleife reguliert wird durch Regulieren des pH des Wassers, welches in den Durchflusskondensator eintritt.

14. Verfahren nach mindestens einem der Ansprüche 10-12, wobei das Verfahren die Zugabe von chemischen Additiven zu dem Wasser umfasst, wobei die chemischen Additive nichtionische und/oder nichtgeladene chemische Additive sind.

15. Verfahren nach Anspruch 14, wobei die chemischen Additive eines oder mehrere der folgenden Rostinhibitoren umfassen: Polyphosphate, Lignosulfonate, Triazole, Tannine, Silicate und Sarcosinate.

16. Verfahren nach Anspruch 10, wobei das Verfahren das Leiten von Wasser von der Rezirkulationsschleife zu dem Durchflusskondensator, um Härteionen aus dem Wasser der Rezirkulationsschleife zu entfernen, während die gelösten Silicaionen in dem Wasser zurückgelassen werden, und das Rückführen des Wassers zu der Rezirkulationsschleife umfasst.

## Revendications

1. Système d'eau de refroidissement à recirculation évaporative, le système étant doté de :
une boucle de recirculation pour faire recirculer l'eau à travers le système ;
une construction avec un espace pour refroidir l'eau dans la boucle de recirculation par évaporation ;
une source d'eau pour fournir de l'eau dans la boucle de recirculation ; et
un appareil d'élimination d'ions pour éliminer les ions de l'eau, l'appareil d'élimination d'ions étant doté d'un condensateur traversant construit et agencé pour éliminer les ions de dureté de l'eau tout en laissant les ions de silice dans l'eau, et le pH de l'eau qui entre dans le condensateur traversant étant régulé à une valeur de pH comprise entre 4 et 9.

2. Système selon la revendication 1, dans lequel le condensateur traversant est doté d'une sortie des eaux usées pour éliminer les eaux usées avec une concentration accrue en ions de dureté.

3. Système selon la revendication 1 ou 2, dans lequel le condensateur traversant est présent entre la source d'eau et la boucle de recirculation de sorte à éliminer les ions de dureté de l'eau de la source avant d'envoyer l'eau dans la boucle de recirculation.

4. Système selon la revendication 1 ou 2, dans lequel le condensateur traversant est présent dans un contournement de la boucle de recirculation de sorte à éliminer les ions de dureté de l'eau dans la boucle de recirculation.

5. Système selon l'une quelconque des revendications précédentes, dans lequel le système est doté d'un capteur pour mesurer une propriété chimique et/ou physique de l'eau dans la boucle de recirculation, par exemple une ou plusieurs des propriétés choisies parmi le pH, l'alcalinité, la dureté, les concentrations en ions de silice, la conductance de l'eau et/ou la quantité de l'eau dans la boucle de recirculation.

6. Système selon l'une quelconque des revendications précédentes, dans lequel l'appareil d'élimination d'ions est doté d'un ajusteur de débit pour ajuster la vitesse de l'eau s'écoulant à travers le condensateur traversant.

7. Système selon l'une quelconque des revendications précédentes, dans lequel est doté d'un dispositif d'addition pour ajouter des additifs chimiques à l'eau et le dispositif d'addition est construit et agencé pour ajouter des inhibiteurs de corrosion, des inhibiteurs de tartre et/ou des biocides à l'eau.

8. Système selon l'une quelconque des revendications 2 à 7, dans lequel le système est doté d'un régulateur réguler la charge et/ou la décharge d'une première et d'une seconde électrode dans le condensateur traversant ; et réguler un moyen de régulation afin de diriger l'eau vers la boucle de recirculation pendant la charge du condensateur traversant et vers la sortie des eaux usées pendant la décharge du condensateur traversant, le régulateur régule l'ajusteur de débit de sorte à ajuster la vitesse de l'eau dans le condensateur traversant en réponse à une fonction de la propriété chimique et/ou physique de l'eau dans la boucle de recirculation mesurée avec le capteur.

9. Système selon la revendication 1, dans lequel la concentration en ions de silice dans la boucle de recirculation est régulée par la régulation du pH de l'eau qui entre dans le condensateur traversant à une valeur de pH comprise de préférence entre 5 et 8.

10. Procédé de fonctionnement d'un système d'eau de refroidissement à recirculation évaporative, le procédé comprenant :
le fait de laisser l'eau entrer dans la boucle de recircuclation du système ;
la recirculation dans l'eau dans la boucle de recirculation ;
le refroidissement de l'eau dans la boucle de recirculation par évaporation ; et
l'élimination des ions de dureté de l'eau tout en laissant les ions de silice dans l'eau, en laissant l'eau s'écouler à travers un condensateur traversant tout en chargeant le condensateur traversant et en dirigeant l'eau du condensateur traversant vers la boucle de recirculation après l'élimination des ions de dureté, comprenant en outre la régulation du pH de l'eau qui entre dans le condensateur traversant à une valeur de pH comprise entre 4 et 9 et de manière préférée entre toutes entre 5 et 8.

11. Procédé selon la revendication 10, dans lequel le procédé comprend l'élimination des ions de dureté de l'eau avant son entrée dans la boucle de recirculation tout en laissant les ions de silice dans l'eau, et la concentration de ces ions de silice dans la boucle de recirculation par évaporation.

12. Procédé selon l'une quelconque des revendications 10 et 11, dans lequel la concentration en ions de silice est entre 3 et 5 fois supérieure dans la boucle de recirculation que dans l'eau qui entre dans la boucle de recirculation.

13. Procédé selon l'une quelconque des revendications 10 à 12, dans lequel la concentration en ions de silice dans la boucle de recirculation est régulée en régulant le pH de l'eau qui entre dans le condensateur traversant.

14. Procédé selon l'une quelconque des revendications 10 à 12, dans lequel le procédé comprend l'ajout d'additifs chimique à l'eau, les additifs chimiques étant des additifs chimiques non ioniques et/ou non chargés.

15. Procédé selon la revendication 14, dans lequel les additifs chimiques comprennent un ou plusieurs des inhibiteurs de rouille suivants : polyphosphates, lignosulfonates, triazoles, tannines, silicates et sarcosinates.

16. Procédé selon la revendication 10, dans lequel le procédé comprend la direction de l'eau de la boucle de recirculation vers le condensateur traversant pour éliminer les ions de dureté de l'eau de la boucle de recirculation tout en laissant les ions de silice dissous dans l'eau et le renvoi de l'eau vers la boucle de recirculation.
